# EUROPEAN PATENT SPECIFICATION

(11) **EP 2 746 357 B1**
(45) Date of publication and mention of the grant of the patent: **30.05.2018**
(21) Application number: 12198563.4
(22) Date of filing: 20.12.2012
(51) Int. Cl.: C09J 7/02, B32B 7/06, B32B 7/12, B32B 27/08, B32B 27/26, B32B 27/30, B32B 27/32, B32B 27/36, B32B 27/40, B32B 27/42

(54) **Layered material comprising polyester resin**
Mehrschichtiges Material umfassend Polyesterharz
Matériau stratifié comprenant une résine polyester

(43) Date of publication of application: 25.06.2014
(73) Proprietor: 3M Innovative Properties Company, St. Paul, MN 55133-3427 (US)
(72) Inventor: Meina, Dominic G., Bracknell, RG12 8HT (GB); Hinchcliffe, Trevor Thomas, Bracknell, RG12 8HT (GB); Barrett, Richard, Bracknell, RG12 8HT (GB); Griebenow, Yolanda, 41453 Neuss (DE); Nguyen, Quoc-Hiep, 41453 Neuss (DE); Nguyen, Trung Kien, 41453 Neuss (DE); Neumann, Bernd, 41453 Neuss (DE)
(74) Representative: Gabriel, Kiroubagaranne

(56) References cited:
- EP-A1- 1 179 577
- WO-A1-2010/011474
- WO-A2-2006/118883
- JP-A- 2006 142 667
- US-A1- 2004 242 758

## Description

### Technical Field

The present disclosure relates to layered materials and methods of making thereof. The disclosure is also related to the use of these layered materials as tamper evident materials, labels, label stocks or decorative films.

### Background

Tamper evident labels or destructible labels are used as so called security labels in those applications where once adhered onto the desired substrate, the label shall not be removed without damage. Known tamper evident label materials or destructible label materials are for example polyvinyl chloride (PVC), polyethylene terephthalate, polyethylene, acetates and polyurethane-acrylates.

Label materials based on PET are known to provide very high tear resistance properties even laminated with high bon adhesives. To provide these PET-based materials with destructibility features, so-called security pre-cuts or voids have to be provided into the polymeric layer at converting process. The disadvantages of such pre-cut or voids is that the surface of the label is no longer smooth, with the consequence that other processing steps such as e.g. after print is not often possible.

Other label materials such as PVC, acetate and PU-acrylate provide insufficient chemical resistance to aggressive solvents, such as e.g. toluene, xylene and fuel. This requirement is particular important in the automotive industry, where security labels are used in the exterior area, and in particular in the vicinity of the engine or fuel tank, need to have a high solvent resistance.

EP-A1-1 179 577 (Herzog et al.) discloses the use of a halogen-free multi-layer sheet material as label and label stock, wherein the multi-layer sheet material comprises: (i) a base film of a polymer comprising the reaction product of a precursor mixture comprising at least one hydroxyl-functional resin and an aminoplast cross-linking agent; (ii) and adhesive layer; and optionally, a release liner. WO 2010/075192 (Nguyen et al.) describes the use of a layered material containing polyvinyl butyral for making labels or decorative films, wherein the layered material comprises: (i) a first layer comprising polyvinylbutyral (PVB), and (ii) a second layer comprising an adhesive, wherein the first layer comprises irradiation-treated areas.

Without contesting the technical advantages associated with the solutions available in the art, there is still a need for a layered material, useful as tamper evident label material, which overcomes the deficiencies previously mentioned, and which in particular provides excellent mechanical properties, such as high destructibility, as well as excellent resistance to severe environmental conditions, such as exposure to heat, solvents and weathering.

Other advantages of the layered material and methods of the invention will be apparent from the following description.

### Summary

According to one aspect, the present invention relates to a layered material according to claim 1. According to another aspect, the present invention relates to a method of manufacturing a layered material according to claim 12. In still another aspect, the present invention relates to the use of a layered according to claim 13.

Embodiments disclosed herein which are not covered by the claims merely serve to illustrate the technical context of the present invention.

### Detailed description

The polymer layer comprising the reaction product of the precursor mixture described herein shows high destructibility or frangibility upon application. Therefore, the polymer comprising the reaction product of the precursor mixture described herein may advantageously be used as tamper evident and/or destructible and/or security label material.

Moreover, the polymer layer comprising the reaction product of the precursor mixture described herein provides high resistance against aggressive solvents and fuels, such as e.g. toluene, xylene and E85. Therefore, the polymer comprising the reaction product of the precursor mixture described herein can advantageously be used in the automotive area, in particular for exterior security labels, and in the vicinity of the engine or fuel tank.

Advantageously, the polymer layer comprising the reaction product of the precursor mixture described herein can be printable by any means selected from the group of irradiation marking, thermal transfer printing, ink-jet printing, screen printing, flexo-printing and any combinations thereof.

According to another advantageous aspect, the polymer comprising the reaction product of the precursor mixture described herein is applicable by casting methods. Therefore, the polymer comprising the reaction product of the precursor mixture described herein allows simple and cost effective preparation of any article selected from the group consisting of labels, signs, decorative films or protective films.

The layered materials, and in particular labels, provided herewith comprise at least a polymer layer (also referred herein as "single layer" valid for single layer construction or "base layer" valid for multiple layer construction) comprising the (polymer) reaction product of a precursor mixture comprising from 20 wt% to 70 wt% of a hydroxy-functional polyester resin and a cross-linking agent, and further comprise an adhesive layer. Various aspects of the precursor mixture of the cross-linked polyester containing polymer are explained in detail below. The polymer layer is for example a cast polymer layer, in particular a cast polyester (based) polymer layer.

Generally, the polymer layer can be used as any layer, for example base layer and/or top layer and/or intermediate layer, of the layered material besides the adhesive layer. It is also possible that the layered material comprises a plurality of such polymer layers. In one particular aspect, the polymer layer is a base layer of the layered material being arranged on the adhesive layer. Thereby, the polymer layer can have a lower surface adjacent or parallel to the adhesive layer.

The layered materials provided herewith may further comprise at least one further layer comprising a polymeric material, in particular a polymeric resin. This layer can be arranged on the base layer and is also referred to herein as "top layer". Suitable polymeric material for forming the top layer for use herein will be easily identified by those skilled in the art, in the light of the present disclosure. Exemplary material useful for preparing a top layer for use herein include, but are not limited to, those selected from the group consisting of polyolefin (in particular polyethylene, polypropylene), polystyrene, polyvinyl (in particular polyvinylbutyral (PVB), polyvinyl chloride or polyvinyl acetate), polyester, polyurethane, polyacrylate, polyacetal, and any combinations, mixtures or copolymers thereof.

According to one aspect, the top layer comprises polyvinylbutyral (PVB), in particular as main resin. Particular executions of the polyvinylbutyral containing polymer are explained in detail below. In another aspect, the top layer for use herein comprises a reaction product of a precursor mixture comprising, in particular from 20 wt% to 70 wt% of a hydroxy-functional polyester resin and a cross-linking agent, which may be identical or different to the polymer reaction product of the base layer.

In a particular execution, the top layer is printable by any means well known to those skilled art. Typically, the top layer is printable by any means selected from the group of irradiation marking, thermal transfer printing, ink-jet printing, and any combinations thereof. The top layer is in particular any of a laser ablatable layer, a layer markable by color change upon irradiation or an ink receptive layer.

The cross-linked polymeric layers of the layered material according to the present disclosure may comprise at least one set of coloring additives. The coloring additives may be dispersed or dissolved within the layer or they may be located on the surface of the layer (for example by coating them onto the layer).

Accordingly, in one aspect, the base layer comprises a first set of coloring additives and optionally, the top layer comprises a second set of coloring additives being different from the first set of coloring additives. Preferably, sets of coloring additives of the base layer and the top layer exhibit contrasting colors, for example black and white, or black and silver, or blue and white, or blue and yellow.

The layered material may advantageously be markable by irradiation, preferably laser irradiation. The materials are markable for example by irradiation with a Nd: YAG or Nd:YVO₄ laser (e.g. 1064 nm wave length) or also CO2 laser (10,64µm). Typically, a first polymeric layer having a thickness of about 4 to 10 µm may be completely ablated (i.e. having an ablation depth of about 4 to 10µm) using a laser at least 20, preferably at least 24 A and at a frequency of 15 to 80 kHz using a laser speed of 1000 mm/s. Irradiation, in particular laser irradiation, may be used to create images or patterns displaying information. For example, the top layer of the layered material can be partially ablated by a laser beam in order to create a pattern of ablated and non-ablated areas. This pattern may generate an image or display information, for example if the pattern is in the form of a series of letter and/or numbers. The patterns can be rendered visible by printing ink on the (non-ablated) surface of the film.

Alternatively, the pattern may be generated or rendered visible by a color change in the top of layer upon e.g. laser irradiation, for example when using laser-sensitive pigments, i.e. pigments that change color upon irradiation with a laser beam. Patterns may also be created by an arrangement of two or more polymeric layers, a top layer and at least one base layer below the top layer.

The base layer may have the same or a different polymer composition than the top layer but top and base layer contain a different set of coloring additives and are thus colored differently or are otherwise visibly discernable from each other. Ablating areas of the top layer exposes the underlying base layer, by which a pattern can be generated in a controlled way. The top layer can have an upper surface opposite to a lower surface adjacent or parallel to the base layer. Thereby, the upper surface of the top layer can be interrupted by areas having a depth of about the thickness of the top layer and wherein the one or more areas are shaped such that they form a letter and/or a number. When using electronically conductive materials to fill the ablated areas or in a base layer which is then exposed by laser ablation, electronically readable devices may be generated, for example, electronically readable labels.

The layered materials provided herein may also be marked, alternatively or in addition to irradiation, by other methods, including, for example but not limited to, etching, engraving, molding, foaming and the like.

The layered materials provided herewith may further comprise a release liner. The release liner can be arranged on the adhesive layer, in particular opposite to the base layer. The release liner can protect the adhesive layer and is to be removed before affixing the material to an article by its adhesive layer.

The layered materials provided herewith may be labels or decorative films or protective films or label stocks, or may be used in the preparation of labels, decorative films or label stocks or protective films. In particular the layered material can be a tamper evident and/or destructible and/or security label, or may be used in the preparation of a tamper evident and/or destructible and/or security label. Possible application areas are explained in detail below. The layered material may be in form of a sheet, in particular a wound up in a roll.

The labels provided herewith can be tamper evident and/or destructible and/or security labels.

The article provided herewith to which an adhesive layer of a layered material has been bonded can contain laser-ablated areas. The article can for example be selected from fuel managing systems, engines, fuel reservoirs, bodies of vehicles or a component thereof.

Labels as referred to herein are individual pieces of layered material containing a polymer layer and an adhesive layer which allows the layered material to be affixed to an article and wherein the polymer layer displays information, such as for example identification of a product, person, manufacturer, proprietor and the like, warnings, instructions and the like.

The individual pieces can be of any shape but typically are of elongated shape or sheet like with the top surface made up by the polymeric layer and the bottom surface being made up by the adhesive layer. Labels may typically have a thickness of up to 5 mm, or even up to 1 mm. The materials provided herewith may be used in labels having a thickness of up to 2 mm or even up to 1 mm.

If a multi-layer construction is used, by which is meant that a construction is used having a base layer and at least one top layer, the base layer may typically have a thickness of at least 5 µm, and typically a thickness comprised between 5 µm and 150 µm, or even between 5 µm and 300 µm.

The top layer of the layered material typically has a thickness comprised between 1 µm and 50 µm. The top layer may be the layer onto which a pattern is typically created, for example by removing parts of the layer, like for example by ablation through irradiation, etching, molding, foaming or engraving. It is to be understood that also thicker top layers may be used. This may then require more energy to create a pattern than in a thinner top coat.

The adhesive layer may typically have a thickness comprised between 1 µm and 300 µm, or between 5 µm and 300 µm. The thickness of the various individual layers of the layered material may be adjusted to meet the desired requirements of the label, as will be easily apparent to those skilled in the art.

The layered materials may further comprise a so-called overcoat layer covering the top coat from the outside. The overcoat layer may or may not be removable from the first polymeric layer. It may be used to protect the first polymeric layer or to add further information which could be displayed by the layered material when used as label or decorative film, for example by providing one or more layer containing an emblem or in-mold logo as described, for example, in international patent application WO 2008/024693 (Nguyen et al.). By way of example, the layered material may contain one or more overcoat layers displaying the name of a user of the label stock (i.e. the material to be converted into a label by creating the information to be displayed on the layered material). The user may then treat the label stock by laser irradiation to create the information-displaying pattern on the layered material to make the labels. The overcoat layers may be of the same or different chemical composition than the top layer. The overcoat layers may be clear or (partially) colored or emblem-carrying, for example displaying a logo or other types of information or decoration. Such overcoat layer may also or alternatively be placed between top layer and base layer. This way, a 3D-like image or pattern may be generated, for example a manufacturer's logo may be displayed by the overcoat layer and specific information relating to use or instructions are generated through laser ablation of the top coat and exposing the differently colored base coat at areas where the overcoat is transparent. Such overcoat layers may typically have a thickness comprised between 3 µm and 50 µm.

Without wishing to be bound by theory, it is believed that the cross-linking agent itself is not solely responsible for the special characteristics, in particular high destructibility/frangibility and high solvent resistance, of the reaction product of the precursor mixture described herein, but that the relatively large proportion of the hydroxy-polyester, functioning as a molecular internal plasticizer, in combination with the cross-linking level agent participate in achieving the special new characteristics.

The precursor mixture of the polymer reaction product comprises from 20 wt% to 70 wt% of a hydroxy-functional polyester resin and a cross-linking agent.

In a typical aspect, the precursor mixture of the polymer reaction product comprises at least 25 wt%, at least 30 wt%, or at least 40 wt%, of a hydroxy-functional polyester resin. In another typical aspect, the precursor mixture of the polymer reaction product comprises up to 60 wt%, up to 50 wt%, or even up to 40 wt%, of a hydroxy-functional polyester resin.

According to a more typical aspect, the precursor mixture of the polymer reaction product comprises from 20 wt% to 60 wt%, from 25 wt% to 50 wt%, or even from 30 wt% to 40 wt% of a hydroxy-functional polyester resin. The precursor mixture of the polymer reaction product may in particular comprise from 30 wt% to 40 wt% of a hydroxy-functional polyester resin.

According to particular aspect, the precursor mixture comprises at least 5 wt%, at least 10 wt%, or even at least 15 wt% of a cross-linking agent. Without wishing to be bound by theory, it is believed that a relatively high cross-linking level of a relatively large proportion of a hydroxy-functional polyester resin may advantageously affect the solvent resistance and destructibility properties of the resulting polymer layer of the layered material of the present disclosure. It is further believed that the destructibility/frangibility properties of the resulting polymer layer may thereby be enhanced.

In a particular execution of the layered material of the disclosure, the precursor mixture comprises from 5 wt% to 40 wt%, from 10 wt% to 35 wt%, from 15 wt% to 30 wt%, or even from 15 wt% to 25 wt% of a cross-linking agent.

Advantageously, the weight ratio between the cross-linking agent and the hydroxy-functional polyester resin is of at least 1:5, at least 1:4, at least 1:3 or even at least 1:2.

In an exemplary aspect, the weight ratio between the cross-linking agent and the hydroxy-functional polyester resin is greater than or equal to 25 %, greater than or equal to 35 % or even greater than or equal to 40 %. For example, the weight ratio between the cross-linking agent and the hydroxy-functional polyester resin is up to 65 %, up to 60 % or even up to 55 %.

As will be apparent to those skilled in the art, in the light of the present description, the precursor mixture may comprise further functionalized resins. However, in special aspects the precursor mixture is free of hydroxyl functional acrylic resins and/or polyvinyl butyral. In a more special aspect, the precursor mixture or rather the polymer is free of other hydroxyl functional resins than hydroxy-functional polyester resins.

According to particular aspect, the precursor mixture comprises less than 35 wt%, less than 30 wt%, less than 20 wt%, less than 15 wt%, less than 10 wt%, less than 5 wt%, or even less than 1 wt% of any hydroxy-functional acrylic resin. More typically, the precursor mixture is substantially free of any hydroxy-functional acrylic resin.

The polymer reaction product of the precursor mixture may typically be a cast polymer, in particular a cast polyester (based) polymer.

The polymer reaction product of the precursor mixture may be used in the preparation of a label or a decorative film or a protective film. In particular, the polymer reaction product of the precursor mixture may be used for the preparation of tamper evident and/or destructible and/or security labels.

Possible application areas for the polymer reaction product of the precursor mixture, the layered material and/or the label can be halogen-free and destructible label for the Electronics and Retail Market, TÜV-sticker, technical and/or security label for Automotive Industry, e.g. VIN-label, security label, sealing label, technical label for high speed ink-jet, destructible label for laser toner print, tamper evident label (VOID+destructible), hologram label with destructible properties, durably destructible laminating, label for Aerospace or Marine industry.

Layered materials according to the present disclosure may also be advantageously be used for the manufacture of optically readable articles, such as laser-markable identity cards, teller cards and the like.

Hydroxy-functional polyester resins for use herein may include any polyester having at least one hydroxy-functional groups. The hydroxy-functional polyester resin may be a saturated or unsaturated polyester resin, an alkyd resin, a polycarbonate or a polylactone, preferably a saturated polyester resin or a polylactone, more preferably a saturated polyester resin.

Saturated hydroxy-functional polyester resins, also oil-free alkyd resins, which include branched or non-branched aliphatic polyester diols or polyols, may be produced by polycondensation of polyols with poly-functional, saturated carboxylic acids or acid anhydrides. Unsaturated hydroxy-functional polyester resins may be based on polycondensation products of mixtures of poly-functional carboxylic acids or acid anhydrides, in which one compound is unsaturated, and diols or polyols.

Alkyd resins may be based on polycondensation products of mixtures containing poly-functional, saturated or unsaturated carboxylic acids or acid anhydrides, diols or polyols and saturated or unsaturated fatty acids or oils, such as triglycerides. Polycarbonate may be prepared by the reaction of diols with phosgene. Polylactones, e.g. polycaprolactones, can be produced by the polyaddition of caprolactone to diols.

Suitable diols and polyols include ethylene glycol, 1,2- propane diol, diethylene glycol, 2-methyl 2-ethyl 1,3 propane diol, 1,4-butane diol, 1,6-hexane diol, neopentyl glycol, trimethyl pentane diol, 1,4-cyclohexane dimethanol, tricylcodecane dimethanol, trimethylol propane, glycerol, hydroxypivalic acid neopentyl glycol ester, pentaerythritol, dipentaerythritol, hydrogenated bisphenol A, bisphenol A-bis-hydroxyethylether, caprolactonediol and similar compounds. Suitable saturated carboxylic acids include isophthalic acid, terephthalic acid, hexahydroterephthalic acid, 5-tert-butylisophthalic acid, adipic acid, azelaic acid, sebacic acid, glutaric acid, chlorendic acid and similar compounds, while suitable saturated acid anhydrides include phthalic anhydride, hexahydrophthalic anhydride, tetrahydrophthalic anhydride, trimellitic anhydride, pyromellitic anhydride and similar compounds. Suitable unsaturated acid components include maleic acid, fumaric acid and their anydrides and Diels-Alder adducts made from maleic anhydride and cyclopentadiene.

The polyesters typically have an average molecular weight of 10,000 to 40,000 g/mol. The average molecular weight preferably is the weight average molecular weight. It can be measured by GPC (gel permeation chromatography).

The hydroxy-functional polyester resins typically have a hydroxyl value of between 20 and 45 mg KOH/g. The hydroxyl-functional polyesters may have an acid value between about 6 and about 20 mg KOH/g.

The degree of cross-linking and the flexibility of the polymeric layered product can be in part adjusted by the initial hydroxy content of the hydroxy-functional polyester applied in the precursor mixture and can be adapted to the desired end use of the films. Cross-linking may be achieved by using the cross-linking agents as described below.

Any cross-linking agent known for cross-linking resins containing OH-groups may be used in the context of the present disclosure. Suitable cross-linking agents for use herein may be easily identified by those skilled in the art, in the light of the present disclosure.

Exemplary cross-linking agents for use herein include, but are not limited to, triazines and triazine resins, aziridines, isocyanates, peroxides, amines and any combinations or mixtures thereof. Such cross-linking agents include isocyanates, such as aliphatic diisocyanates or blocked isocyanates. The isocyanate moiety is transformed with suitable blocking agents into another moiety which can be regarded as a latent isocyanate group. Suitable blocking agents are, for example, those that unblock at elevated temperatures, thus generating again the isocyanate group.

In a particular aspect, the cross-linking agent is an amino-functional cross-linking agent or so called aminoplast cross-linking agent, which is preferably selected from the group consisting of triazines and triazine resins, aziridines, isocyanates, peroxides amines and any combinations or mixtures thereof.

Preferably, the cross-linking agent selected from triazines and triazine resins, urea-formaldehydes and urea-formaldehyde resins, cyanamides and cyanamide resins, glycoluril resins and mixtures thereof. Preferably, the cross-linking agent is a triazine or a triazine resin. More preferably, the cross-linking agent is a triazine or triazine resin selected from the group consisting of melamine or melamine resins, guanamine or guanamine resins and mixtures thereof. Guanamine resins include benzoguanamine resins. Most preferred are melamines or melamine resins as the cross-linking agent.

Suitable melamine resins include melamine-formaldehyde resins, alkylated melamine-formaldehyde resins and mixtures thereof. Alkylated melamine-formaldehyde resins include methylated and/or butylated melamine-formaldehyde resins having a high degree of alkylation.

Alkylated melamine-formaldehyde resins such as methoxymethyl butoxymethyl melamine resin, methoxymethyl isobutoxymethyl melamine resin, hexamethoxy methyl melamine resin, methoxy ethoxy melamine-formaldehyde resin and mixtures thereof, have been found suitable as cross-linking agent for use herein.

In a particular execution, the cross-linking agent is a an alkylated melamine-formaldehyde resin, preferably a methylated melamine-formaldehyde resin having in particular a low degree of alkylation and/or a high imino functionality. Imino-functional methylated melamine formaldehyde resins, in particular highly imino-functional, in particular highly reactive, methylated melamine formaldehyde resins, have been found to be particularly suitable as cross-linking agent.

In a particular execution, the precursor mixture for use herein may comprise only one cross-linking agent.

The polymeric material for use herein may advantageously contain optional ingredients such as e.g. coloring additives, glass flux, solvents, wetting additives and catalysts.

The layered material may comprise one or more additives which may in particular render the ablated areas more visually discernable from the non-ablated areas.

Such additives comprise, in particular, coloring agents such as inorganic pigments including metallic pigments or metallic flakes, such as aluminum flakes or particles, organic pigments, water-borne or solvent-borne inks or dyes, and/or inorganic microspheres and/or beads such as, for example, glass beads. These additives may be selected so that the ablated areas become visually discernible from the surrounding non-ablated areas by the unaided eye under normal ambient light conditions.

It is also possible that the additives are selected so that the ablated areas are visibly discernible when viewing them through magnifying glasses or a microscope, respectively, or upon irradiating the layered materials with UV light, IR light or viewing it under retroreflective lighting conditions. For example, partially metalized glass beads or a combination of glass beads which may or may not be metalized, with metal flakes exhibit retroreflective properties. The term "partially metalized glass beads" refers to glass beads 20 - 60 % of the surface of which are coated with a thin metal film which may be applied, for example, by CVD or PVD techniques. The use of glass beads which may or may not be aluminized in combination with aluminum and/or silver flakes or particles is preferred. Glass beads are preferably essentially spherical. Typically, the spheres have a diameter of between 40-60 µm.

Inorganic pigments may also be suitable and include, for example, titanium dioxide, carbon black, vegetable black, iron oxide pigments, chromium oxide pigments including chromium oxide green, ultramarine blue, chrome green, phthalo chrome green, mixed metal oxide pigments, bi-vanadates, and any combinations of mixtures thereof.

Organic pigments include, for example, azo pigments, polycyclic pigments and metal complex pigments. Suitable azo pigments include, for example, monoazo yellow and orange pigments, disazo pigments, naphthol pigments, benzimidazolone pigments and disazo condensation pigments. Suitable polycyclic pigments include, for example, phthaiocyanine pigments, quinacridone pigments, peryiene and perinone pigments, thioindigo pigments, anthraquinone pigments, dioxazine pigments, isoindolinone and isoindoline pigments, diketopyrrolo pyrroie pigments, triaryicarbonium pigments and quinophthaione pigments.

Commercially available inorganic pigments which are suitable for use in the layered materials include, for example, carbon black available as carbon black paste from Degussa, Germany. As a white colored pigment, titanium dioxide in silane modified form can be used (Kronos CL 310, Kronos Titan, Leverkusen, Germany). Additionally, aluminum particles of 5 µm length in a solvent (STAPA- Off-Set 3000, Eckhart-Werke, Fürth, Germany) may advantageously be used.

Commercially available organic pigments or dyes include isoindolininone yellow commercially available as Cromophtal Yellow 2RLTS from Ciba; peryiene red commercially available as Irgazin Red BPTN from Ciba; pthalocyanine green, a halogenated Cu-phtalocyanine commercially available as Chomophtal Green GFN from Ciba; quinacridone violet commercially available as Cinquasia Violet RRT- 899D from Ciba; C. I. pigment red 178/71155 (Paliogen rot L3910 HD, BASF, Ludwigshafen, Germany); C. I. pigment yellow 110 (Irgazin gelb 3RLT-N, Ciba- Geigy, Marienberg, Germany); and C. I. pigment blue 1511 , Heliogen blau K6911 D, BASF, Ludwigshafen, Germany), Lumogen Black FK 4280, Lumogen Black FK 4281, BASF, Ludwigshafen, Lumogen F Green 850, BASF, Ludwigshafen, Lumogen F Red 305, BASF, Ludwigshafen Lumogen IR 765, BASF, Ludwigshafen.

Pearlescent pigments that subtly change color as the viewing angle is changed can be obtained, for example, from Merck KGaA, Darmstadt, Germany, under the Iriodin trade designation.

Liquid crystal polymer additives which change color when the viewing angle is changed are also suitable and can be obtained from, for example, Wacker Chemie of Munich, Germany. It is also possible to use up-converting pigments, down-converting pigments or a combination thereof.

Down-converting pigments are pigments that emit UV light upon absorption of light from the visible spectrum. Preferred are down-converting pigments having an average particle size greater than 1 µm or greater than 1.5 µm. An example of a down converting additive which is invisible under ambient light but visible under UV light is Black Light Varnish available from Wernecke of St. Paul, MN, USA. Other examples are fluorescent or phosphorescent pigments such as rare earth metals or rare earth metal oxides, e.g. neodymium oxides. A suitable fluorescent pigment is available from Honeywell under the trade designation Lumilux Effect Blue SN. Examples of phosphorescent pigments include the Lumilux Phosphorescent pigments series available from Honeywell such as those available under the trade designation Luminux green SN-F5, Lumilux Green N5 or Lumilux C-Pigments.

Exemplary up-converting (anti-stoke's) pigments are materials capable of emitting electromagnetic radiation of greater energy upon absorption of electromagnetic radiation of lower energy. For example, the up-converting pigments may be capable of absorbing infrared radiation and emitting radiation in the visible spectrum (e.g. from about 400 nm up to less than 700 nm wavelength), e.g. pigments that emit green light upon irradiation with infrared light (e.g. radiation of from about 700 to about 1300 nm wave length). It is also possible to use an up- converting pigment which is excited by electromagnetic radiation of the visible spectrum and emits UV light (e.g. radiation of a less than 400 nm up to less than 250 nm wave length). Up-converting pigments are typically inorganic materials doped with erbium (Er), yterbium (Yb) or thulium (Tm), such as for example rare earth metal fluorides doped with rare earth metals or metal ions, such as for example Y^{b3+}, Er³⁺, Tm³⁺, Nd³⁺, Ho³⁺, although crystals doped with ions of some transition metals, e.g. Ti²⁺, Ni³⁺, Mo³⁺ or Re⁴⁺ have also been used in the fabrication of up-converting pigments. Typical examples of up-converting pigments correspond to the general formula Nal_nF4: Yb³⁺, Er³⁺ with Ln typically being Y, Gd or La. A particular example is NaYO.57,YbO.39, ErO.39F4. Other examples include oxysulfide doped with rare metals corresponding to the general formula M₂O₂S: Yb, Tm, Er with M being a lanthanoid or Y, Sc such as for example Gd₂O₂S: Yb, Tm, Er or Y₂O₂S₂: Yb, Tm, Er. Other examples of crystals that may be doped with such ions include manganese halides and tungstate crystals such as RbMnCl₃, CsMnCl₃, CsMnBr₃, Rb₂MnCl₄ or NaY(WO₄)₂. Examples of suitable up-onverting nanopowders include Al₂O₃ or yttrium aluminum garnet doped with Nd³⁺ or Ce³⁺. Preferably, the up-converting pigments are crystalline.

The coloring agents are typically present in particulate form and may be present as solution or dispersion. The average size of the coloring agents can vary widely. Typically, the coloring agents have an average size (number average) of between 0.1 µm and 50 µm or even more. Titanium dioxide, for example, has a size of typically between 0.2 µm and 1 µm, whereas red iron oxide has typically has an average size of between 0.3 µm and 3 µm. The average size of metal particles and flakes typically is between 3 µm and 25 µm, and glass beads have a typical average size of between 40 µm and 60 µm. The person skilled in the art will easily select the appropriate thickness of the polymeric layer(s) in view of the respective average size of the coloring agents used.

In one aspect, the coloring additives are those which exhibit a color change upon irradiation with an energy source other than visible light, e.g. UV light (e.g. down-converting pigments) IR- light (e.g. up-converting pigments) or laser marking. In some executions, the one or more additives included into the polymeric layer of the layered material are present in an amount of from between 2 pph and 70 pph, and, in some embodiments, between 2 pph and 50 pph (parts per hundred resin) with respect to the mass of the polymer layer.

Any wetting agents know to those skilled in the art, in the light of the present disclosure, may be used herein. Suitable wetting agents may support the casting performance of the layers and the formation of a uniform and smooth surface without surface defects and/or pinholes. Suitable wetting agents include acrylate-based polymers, for example, an acrylate-based wetting agent under the trade designation DISPARLON L 1980 from Kusomoto, Japan. The wetting agent can be present in amounts from 0.1 wt% to 2.0 wt%, based on total weight of the polymer layer. Further wetting agent include fluorinated surfactants, fluorinated hydrocarbons and the like.

Catalysts may be used to promote cross-linking reactions of the cross-linking agent with the hydroxy-functional polyester resins or other polymeric resins. Suitable catalysts include, but are not limited to, alkyl acid phosphates, phosphoric acid, maleic acid and anhydride, fumaric acid, chloromaleic acid and anhydride, alkyl acid phthalates, monoalkyl succinates and maleates. Catalysts which have been found to be particularly suitable are compounds such as sulfonic acids and derivatives thereof including, for example p-toluene sulfonic acid, methyl-p-sulfonic acid dodecyl benzene sulfonic acid and the like, tin(II)salts, for example but not limited to DBTL (di-butyl tin laurate) or tin(II) ethylhexanoate. Catalysts may be present in amounts from 0.1 wt% to 1.0 wt%, based on total weight of the polymer layer.

The skilled person will easily apprehend that for adjusting characteristic properties layered materials and for economical reasons fillers, e.g. mica, calcium carbonate kaolin, may be used in preparing the layered materials and may be present in the layers. Further adjuvants include, for example but not limited to, UV-absorber (for example those available under the trade designation Tinuvin Uvinul) and antioxidants (for example, but not limited to those available under the trade designation Irganox).

Any adhesive layer well know to those skilled in the art may be used in the context of the present disclosure. The adhesive layer may contain one or more adhesives. Preferably, the adhesives are pressure sensitive adhesives or heat-activatable adhesives. These may comprise adhesives based on polyacrylates, polyesters, polyolefins, polyamides, polyurethanes, silicone polymers, polybutadiene and copolymers, polyisoprenes and copolymers, natural and synthetic rubber as well as hydrogenated derivatives thereof with and without resins, fillers and cross-linking agents.

Polyacrylates have also proven to be useful, particularly those which have been modified for use on a variety of surfaces having very different surface energies, such as steel/polyethylene. Useful alkyl acrylates (i.e. acrylic acid alkyl ester monomers) for the preparation of polyacrylates include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate.

Particularly preferred are acrylate based pressure-sensitive adhesive materials such as copolymers of isooctyl acrylate and acrylic acid like those disclosed in U.S. Patent No. 2,884,126. The adhesive layer may have a thickness of from about 5 µm to about 300 µm, preferably from about 10 µm to about 60 µm.

The pressure-sensitive adhesives which are particularly preferred are tackified or non-tackified isooctyl acrylate and acrylic acid copolymers. The copolymers are preferably employed in amounts ranging from 50 wt% to 70 wt% and preferably in an amount of about 60 wt%. As the tackifying resin, is preferably used Foral 85 (company Hercules), a hydrogenated rosin or its glycerol or pentaerythritol esters in amounts of preferably 30 to 50 % and particularly preferred of about 40 % by weight. Antioxidants in amounts of about 1% and crosslinkers such as for example aziridine compounds may also be present in the adhesive layer.

The adhesive layer amy be protected from the outside by a release liner. The release liner is preferably adhesive-repellent and more specifically comprises paper or film which has been coated or modified with compounds of low surface energy relative to the adhesive applied. Organo silicone compounds, fluoropolymers, polyurethanes and polyolefins can serve this purpose. The release liner amy also be a polymeric sheet produced from polyethylene, polypropylene, PVC, polyesters with or without the addition of adhesive-repellant compounds. The release liner may have a thickness of from about 10 µm to about 250 µm, preferably from about 30 µm to about 120 µm.

According to another aspect, the present disclosure relates to a label comprising a polymer layer comprising the reaction product of a precursor mixture, wherein the precursor mixture comprises from 20 wt% to 70 wt% of a hydroxy-functional polyester resin and a cross-linking agent.

According to still another aspect of the present disclosure, it is provided an article to which a layered material or a label as above-described is adhered by the adhesive layer of the layered material, and wherein the layered material contains in particular laser-ablated or laser color change marking areas. The article is advantageously selected from the group of fuel managing systems, engines, fuel reservoirs, bodies of vehicles, and any combinations thereof.

In still another aspect, it is provided a tamper evident and/or destructible label material, comprising a polymer layer comprising the reaction product of a precursor mixture, wherein the precursor mixture comprises from 20 wt% to 70 wt%, from 20 wt% to 60 wt%, from 25 wt% to 50 wt%, or even from 30 wt% to 40 wt% of a hydroxy-functional polyester resin and from 5 wt% to 40 wt%, from 10 wt% to 35 wt%, from 15 wt% to 30 wt%, or even from 15 wt% to 25 wt% of a cross-linking agent.

The present disclosure is also directed to a method of manufacturing a layered material as described above, which comprises the steps of:
a) providing a precursor mixture comprising from 20 wt% to 70 wt% of a hydroxy-functional polyester resin and a cross-linking agent;
b) providing a layer of the precursor mixture and crosslinking the mixture to form a polymer layer;
c) applying an adhesive layer onto the polymer film, and optionally, covering the adhesive layer with a release liner.

In another aspect, the present disclosure relates to the use of a polymer layer comprising the reaction product of a precursor mixture, wherein the precursor mixture comprises from 20 wt% to 70 wt of a hydroxy-functional polyester resin and a cross-linking agent, in the manufacture of an article selected from the group consisting labels, signs, decorative films, and any combinations thereof.

In still another aspect, the present disclosure relates to the use of a layered material as above described, as an article selected from the group consisting labels, label stocks, signs, decorative films, and any combinations thereof.
Item 1 is a layered material, comprising:
   a) a polymer layer comprising the reaction product of a precursor mixture comprising from 20 wt% to 70 wt% of a hydroxy-functional polyester resin and a cross-linking agent; and
   b) an adhesive layer.
Item 2 is the layered material according to item 1, wherein the precursor mixture comprises from 20 wt% to 60 wt%, from 25 wt% to 50 wt%, or even from 30 wt% to 40 wt% of a hydroxy-functional polyester resin.
Item 3 is a layered material according to any of item 1 or 2, wherein the precursor mixture comprises at least 5 wt%, at least 10 wt%, or even at least 15 wt% of a cross-linking agent.
Item 4 is a layered material according to any of the preceding items, wherein the precursor mixture comprises from 5 wt% to 40 wt%, from 10 wt% to 35 wt%, from 15 wt% to 30 wt%, or even from 15 wt% to 25 wt% of a cross-linking agent.
Item 5 is a layered material according to any of the preceding items, wherein the weight ratio between the cross-linking agent and the hydroxy-functional polyester resin is of at least 1:5, at least 1:4, at least 1:3 or even at least 1:2.
Item 6 is a layered material according to any of the preceding items, wherein the cross-linking agent is an aminoplast cross-linking agent, preferably selected from the group consisting of triazines and triazine resins, aziridines, isocyanates, peroxides amines and any combinations or mixtures thereof.
Item 7 is a layered material according to any of the preceding items, wherein the cross-linking agent is a triazine resin, preferably selected from the group of melamine resins, in particular melamine formaldehyde resins.
Item 8 is a layered material according to item 7, wherein the cross-linking agent is an alkylated melamine-formaldehyde resin, preferably a methylated melamine-formaldehyde resin having in particular a low degree of alkylation and/or a high imino functionality.
Item 9 is a layered material according to any of the preceding items, wherein the precursor mixture comprises less than 35 wt%, less than 30 wt%, less than 20 wt%, less than 15 wt%, less than 10 wt%, less than 5 wt%, or even less than 1 wt% of any hydroxy-functional acrylic resin.
Item 10 is a layered material according to any of the preceding items, wherein the precursor mixture is substantially free of any hydroxy-functional acrylic resin.
Item 11 is a layered material according to any of the preceding items, wherein the polymer layer is a cast polymer layer.
Item 12 is a layered material according to any of the preceding items, wherein the polymer layer is a base layer of the layered material being arranged on the adhesive layer.
Item 13 is a layered material according to item 12, wherein the base layer is printable by any means selected from the group of irradiation marking, thermal transfer printing, ink-jet printing, and any combinations thereof.
Item 14 is a layered material according to any of the preceding items, wherein the polymer layer is a base layer which is a laser ablatable layer or a layer markable by color change upon irradiation (without any ablation), wherein the base layer is arranged on the adhesive layer.
Item 15 is a layered material according to any of items 12 to 14, which further comprises a top layer arranged on the base layer, wherein the top layer is printable by any means selected from the group of irradiation marking, thermal transfer printing, ink-jet printing, laser toner printing, and any combinations thereof.
Item 16 is the layered material of item 15, wherein the top layer is any of a laser ablatable layer, a layer markable by color change upon irradiation or an ink receptive layer.
Item 17 is a layered material according to any if item 15 or 16, wherein the top layer comprises a material selected from the group consisting of polyolefin (in particular polyethylene, polypropylene), polystyrene, polyvinyl (in particular polyvinyl chloride or polyvinyl acetate), polyester, polyurethane, polyacrylate, polyvinylbutyral (PVB), and any combinations, mixtures or copolymers thereof.
Item 18 is a layered material according to item 17, wherein the top layer is obtained by a process selected from the group consisting of polymerization, polycondensation, polyaddition, and any combinations thereof.
Item 19 is a layered material according to any of items 15 to 18, wherein the base layer contains a first set of coloring additives (in particular pigments and/or dyes) and the top layer contains a second set of coloring additives being different from the first set of coloring additives or dyes.
Item 20 is a layered material according to item 19, wherein the coloring additives are selected from the group consisting of fluorescent additives, photoluminescent additives, phosphorescent additives, thermochrome additives, antistokes pigments, glass flux, dyes, and any combinations thereof.
Item 21 is a layered material according to any of the preceding items, wherein the layered material further comprises a release liner arranged on the adhesive layer, in particular opposite to the base layer.
Item 22 is a layered material according to any of the preceding items, wherein the layered material is selected from the group consisting of tamper evident labels, destructible labels, security labels, and any combinations thereof.
Item 23 is a label comprising a polymer layer comprising the reaction product of a precursor mixture, wherein the precursor mixture comprises from 20 wt% to 70 wt%, from 20 wt% to 60 wt%, from 25 wt% to 50 wt%, or even from 30 wt% to 40 wt% of a hydroxy-functional polyester resin and a cross-linking agent.
Item 24 is an article to which a layered material according to any of items 1 to 22 or a label according to item 23 is adhered by the adhesive layer of the layered material, and wherein the layered material comprises in particular laser-ablated or laser color change marking areas.
Item 25 is the article of item 24, which is selected from the group of fuel managing systems, engines, fuel reservoirs, bodies of vehicles, and any combinations thereof.
Item 26 is a tamper evident and/or destructible label material, comprising a polymer layer comprising the reaction product of a precursor mixture, wherein the precursor mixture comprises from 20 wt% to 70 wt%, from 20 wt% to 60 wt%, from 25 wt% to 50 wt%, or even from 30 wt% to 40 wt% of a hydroxy-functional polyester resin and from 5 wt% to 40 wt%, from 10 wt% to 35 wt%, from 15 wt% to 30 wt%, or even from 15 wt% to 25 wt% of a cross-linking agent.
Item 27 is a method of manufacturing a layered material according to any of claims 1 to 20, which comprises the steps of:
   a) providing a precursor mixture comprising from 20 wt% to 70 wt% of a hydroxy-functional polyester resin and a cross-linking agent;
   b) providing a layer of the precursor mixture and crosslinking the mixture to form a polymer layer;
   c) applying an adhesive layer onto the polymer film, and optionally, covering the adhesive layer with a release liner.
Item 28 is the use of a polymer layer comprising the reaction product of a precursor mixture, wherein the precursor mixture comprises from 20 wt% to 70 wt of a hydroxy-functional polyester resin and a cross-linking agent, in the manufacture of an article selected from the group consisting labels, signs, decorative films, protective films, and any combinations thereof.
Item 29 is the use of a layered material according to any of items 1 to 22 as an article selected from the group consisting labels, label stocks, signs, decorative films, protective films, and any combinations thereof.

### EXAMPLES

The invention is further illustrated by the following examples. These examples are merely for illustrative purposes only and are not meant to be limiting on the scope of the appended claims.

### List of materials

### Component A (Polyester resin)

A1: Uralac CP 4079 SN ND, saturated polyester resin, dissolved in solvent naphtha 61 % solids, commercially available from DSM Coating Resins Europe B.V. (the Netherlands).
A2: Vittel 2700 B, saturated non-crosslinked polyester resin, 100 % solids, commercially available from Bostik (United Kingdom).
A3: Uralac SY 946, hydroxy polyester resin, 100 % solids, commercially available from DSM Coating Resins (Zwolle, The Netherlands).

### Component B (Cross-linking agent - Formaldehyde-melamine resin)

B1: Cymel 325, methylated formaldehyde melamine resin with high imino content, 78-82 % solids, commercially available from Cytec Industry B.V. (3197 KA Botlek-Rotterdam, The Netherlands).
B2: Resimene 717, imino-type methylated melamine formadehyde resin, 84 % solids in n-Butanol, commercially available from INEOS Melamines GmbH (Germany).
B3: Cymel 1133, methoxymethyl butoxymethyl melamine, commercially available from Dyno Cytec (Lillestrom, Norway).

### Component C (Casting paper or release carrier)

C: 3M-SCW 231, release carrier, prepared as described below.

Release carrier SCW231 comprising a polymer-coated paper is prepared by taking a 108 g HIFI Kraft paper (available from Chem Tenero AG) and coating it with a solution of acrylic release material. The coated paper is then dried to give a dry coating weight of 30 g/cm². The coated paper surface is smooth and glossy and exhibit an average roughness Rz of approximately 1,0 µm.

### Component D (Antioxidant)

D: Irganox 1076, phenolic primary antioxidant, sterically hindered phenolic antioxidant, octadecyl-3-(3,5-di-tert.butyl-4-hydroxyphenyl)-propionate, commercially available from BASF (Germany).

### Component E (Light stabilizer)

E1: Tinuvin 770, UV-absorber, commercially available from BASF (Germany).
E2: Tinuvin 777, UV-absorber, commercially available from BASF (Germany).

### Component F (Color agent)

F1: Ti-Pure R-960, rutile titanium dioxide pigment, TiO₂ pigment, commercially available from DuPont (USA).
F2: Isoversal LM 0677, carbon black paste, commercially available from ISL-Chemie GmbH & Co. KG (Germany).
F3: Daxo 4 (also commercially available as Daxo-Color P), carbon black paste, 25 % solids, commercially available from SIL Lackfabrik GmbH & Co KG (Germany).
F4: Kronos 2310, titanium dioxide pigment, commercially available from Kronos Europe (Belgium).

### Component G (Filler)

G: WCD 804, talc, CaCO₃, commercially available from Mineral and Pigment Solutions Inc. (USA).

### Component H (Pressure sensitive adhesive)

H: 3M Adhesive Transfer Tapes 966, thickness of about 60µm, commercially available from 3M (USA).

### Component I (Flow modifier)

I: Modaflow, acrylic flow modifier, 20 % by weight in butylcarbitol acetate, commercially available from Cytec Surface Specialties S.A./N.V. Europe (Belgium).

### Component J (hydroxy-functional acrylic resin)

J: Uracron CY 474 E 70, hydroxy acrylic resin, 70 % solids in butyl acetate, commercially available from DSM Coating Resins (Zwolle, The Netherlands).

### Component K (catalyst)

K: Cycat 4040, alkyl benzene sulfonic acid catalyst for highly alkylated melamine, benzoguamine, glycoluril and urea resins in iso-propanol, commercially available from Cytec Industries (Belgium).

### Component L (wetting agent)

L: Disperlon 1980, commercially available from Kusomoto (Japan).

### Component M (polyurethane)

M: NeoRez 9660, aliphatic (water-borne) urethane dispersion, 33 % aliphatic urethane, commercially available from DSM NeoResins (The Netherlands).

### Component N (Polyfunctional aziridine)

N: Neocryl CX-100, polyfunctional aziridine, commercially available from DSM NeoResins (The Netherlands).

### Component O (Release Carrier)

O: 3M-SCW 231, commercially available from 3M (USA).

### Examples 1 to 4 and Comparative Examples 1 to 3

### Preparation of coating mixture (BC1) for making a white base coat of layered material according to Examples 1 to 4:

59.7 wt% Uralac CP 4079 SN ND (component A1), 20.9 wt% Resimene 717 (component B2), 16.1 wt% Ti-Pure R-960 (component F1), 0.1 % by weight Irganox 1076 (component D), 0.1 % by weight Tinuvin 770 (component E1) are mixed and homogenized for 30 minutes.

### Preparation of coating mixture (TB1) for making a black top coat of layered material according to Example 1

6.1 wt% xylene and 60.6 wt% polyvinylbutyral resin solution (40 % X/n-butanol) are mixed and homogenized. Then 15.2 wt% Resimene 717 (component B2) are added under stirring and homogenized. Then 6.1 wt% of Uralac CP 4079 SN ND (component A1) are added under stirring and homogenized. Finally, 6.1 wt% of Isoversal LM 0677 (component F2) and 6.1 wt% Daxo 4 (component F3) are added under stirring and homogenized for 15 minutes.

### Preparation of coating mixture (TC1) for making a clear top coat of layered material according to Example 2

97.7 wt% NeoRez 9660 (component M), 2.0 wt% Neocryl CX-100 (component N), 0.2 wt% Irganox 1076 (component D) and 0.2 wt% Tinuvin 777 (component E2) are mixed and homogenized for 15 minutes.

### Preparation of coating mixture (TC2) for making a clear top coat of layered material according to Example 3 and 4

A non-crosslinked polyester mixture of Vittel 2700 B (component A2) is used.

### Preparation of coating mixture (CEBT) for making a black top coat of a layered material according to Comparative Example 1

50.4 wt% Uracron CY474 E-70 (component J), 12.6 wt% Uralac SY 946 (component A3), 9.5 wt% Cymel 1133 (component B3), 11.2 wt% DBE (Dibasic Ester), 0.3 wt% Cycat 4040 (component K), 0.2 wt% Disperlon 1980 (component L) and 15.8 wt% Isoversal LM 00677 (component F2) are mixed and homogenized for 30 minutes.

### Preparation of coating mixture (CEWB) for making the white base coat of layered material according to Comparative Example 1

48.7 wt% Uracron CY474 E-70 (component J), 8.1 wt% Uralac SY 946 (component A3), 12.2 wt% Cymel 1133 (component B3), 2.0 wt% DBE (Dibasic Ester), 0.3 wt% Cycat 4040 (component K), 0.3 wt% Disperlon 1980 (component L) and 28.4 wt% Kronos 2310 (component F4) are mixed and homogenized for 30 minutes.

### Example 1 (dual layer label with white polyester resin base coat and black PVB top coat)

Example 1 is prepared by coating top coat coating mixture TB1 onto a release carrier (component O) and drying the coating 10 minutes at room temperature, 1 minute at 80 °C and 2 minutes at 190 °C. Then, base coating mixture BC1 is coated, with a thickness of about 50 µm, onto the pre-described dried top coat layer. Then, the layered system is dried 10 minutes at room temperature, 2 minutes at 80 °C and 3 minutes at 195 °C. A 3M Transfer Tape 966 is then laminated onto the white base layer. Finally, the release carrier used in the first step of the production is removed.

### Example 2 (dual layer label with white polyester resin base coat and clear polyurethane top coat)

In a first step, top coat coating mixture TC1 is coated onto a release carrier (component O) as ink-receptive topcoat and oven dried for 3 minutes at 90 °C. Its thickness is about 11 µm after drying. Then, base coat coating mixture BC2 is coated onto the ink-receptive top coat layer and dried for 3 minutes at 70 °C and for 3 minutes at 195°C. The coating thickness of this second polymer layer is about 48 - 50 µm after drying. A 3M Transfer Tape 966 is then laminated onto the white base layer. Finally, the release carrier used in the first step of the production is removed.

### Example 3 (dual layer label with white polyester resin base coat and clear saturated non-crosslinked polyester resin top coat)

In a first step, base coating mixture BC1 is coated onto a release carrier (component O) and dried for 3 minutes at 70 °C and for 3 minutes at 195 °C. The coating thickness of this polymer layer is about 50 µm after drying. As a next step, 3M Transfer Tape 966 is laminated onto the polymer layer. The release carrier used in the first step of the production is then removed. Finally, the coating mixture TC2 is coated onto polymer layer BC1 as an ink-receptive top coat layer TC2 with a coating weight of 0,7 g/m² and oven dried for 2 minutes at 90 °C.

### Example 4 (single layer label with white polyester resin coat, non top-coated)

In a first step, base coating mixture BC1 is coated onto a release carrier (component O) and dried for 3 minutes at 70 °C and for 3 minutes at 195 °C. The coating thickness of this polymer layer is about 50 µm after drying. As a next step, 3M Transfer Tape 966 is then laminated onto the white polymer layer. Finally, the release carrier used in the first step of the production was removed.

### Comparative Example 1

Comparative Example 1 is prepared by coating top coat coating mixture CEBT onto a release carrier (component O) and drying the coating 1 minute at room temperature, 2 minutes at 80 °C, 1 minute at 140 °C and 2 minutes at 190 °C. Then, base coating mixture CEWB is coated, with a thickness of about 40 µm, onto the pre-described dried top coat layer. Then, the layered system is dried 1 minute at room temperature, 2 minutes at 80 °C, 2 minutes at 140 °C and 2 minutes at 190 °C. As a next step, 3M Transfer Tape 966 is laminated onto the base coat and a release liner is applied to the adhesive layer.

### Comparative Example 2

3M-3812 Polyurethane destructible label (commercially available from 3M) is used as Comparative Example 2.

### Comparative Example 3

3M-7816E PET-label (commercially available from 3M) is used as Comparative Example 3.

### Test Methods and Test Results

### A. Printability and Snap Test (ink anchorage test)

The appearance and legibility of print image are visually observed and evaluated. No discontinuing printing image is allowed.

### A.1 Thermal transfer print

Examples 2 to 4 and Comparative Examples 2 and 3 are thermal transfer printed using a Zebra 110 XiIII+ printer and Armor AXR7+ ribbon with a Burn temperature level of 25 and a printing speed of 25.4 mm/s.

### A.2 Ink-Jet Print

Example 2 and Comparative Examples 2 and 3 are ink-jet printed using a Roland LEC-300 printer, using LED uv-cured inks: cyan, magenta, yellow, black, blue, red, green. Printing parameters: standard solution : 720x720 dpi; uni-directional.

### A.3 Snap Test

The thermal transfer printed Examples 2 to 4, the ink-jet printed Example 2 and the thermal transfer and ink-jet printed Comparative Examples 2 and 3 are subjected to a snap test with 3M-Tape 610 (without cross-cut). No ink-debonding is allowed.

All tested examples showed good results in appearance and ink adhesion.

### B. Destructibility Test

The destructibility of Example 1 to 4 and Comparative Example 1 to 3 are tested according to VW-TL-52038, with the exception that the removing of test sample is performed manually. Applied substrates are: PE and aluminum, dwell 72hrs at 20°C and 50% r.h.

Examples 1 to 4 provide good destructibility properties as Comparative Examples 1 and 2, whereas Comparative Example 3, which has a very high tear strength, does not provide good destructibility properties.

### C. Solvent Resistance Test

Example 1 and Comparative Example 1 are marked by laser ablation using Rofin Sinar Laser and subjected together with the thermal transfer printed Examples 2 to 5, the ink-jet printed Example 2 and the thermal transfer and ink-jet printed Comparative Examples 2 and 3 to solvent resistance test by immersion in solvent and fuel.

This test is performed according to the information sheet " Identification Labels" published in July 2007 and distributed by the Federal Motor Transport Authority in Germany (KBA, Kraftfahrt-Bundesamt in 24932 Flensburg, Germany). Thereby, the samples are applied on aluminum-plates for 48 hrs at 22°C before starting the immersion test. No ink-debonding and strong swelling of the label are allowed. Sample has to be destructed and removed by using a razor blade after re-conditioning time of 48 hours.

The test samples are visually inspected for changes in the visibility of the markings. The results of the immersion solvent resistance test are given in Table 1.
Rating code: (+) Pass
(-) Fail

**Table 1: Immersion Solvent Resistance Test.**

| Sample | Immersion in Toluene required 15 min | Immersion in E 85 required 30 min | Immersion in mixture of 50 % fuel, 30 % toluene and 20 % ethanol required 30 min |
|---|---|---|---|
| Example 1 laser ablated | (+) | (+) | (+) |
| Example 2 thermal transfer digital ink jet | (+) | (+) | (+) |
| | (+) | (+) | (+) |
| Example 3 thermal transfer | (-) Ink- debonding (2 min) | (+) | (+) |
| Example 4 thermal transfer | (+) | (+) | (+) |
| Comparative Example 1 | (-) swollen up (15 min) | (-) swollen up (15 min) | (-) swollen up (15 min) |
| Comparative Example 2 thermal transfer | (+) | (-) swollen up (20 min) | (-) swollen up (18 min) |
| digital ink jet | (-) swollen up (15 min) | (-) swollen up (15 min) | (-) swollen up (15 min) |
| Comparative Example 3 thermal transfer | (-) ink debonding (5 min) | (+) | (+) |
| digital ink jet | (-) ink debonding (5 min) | (-) ink debonding (10 min) | (-) ink debonding (5 min) |

### D. UV-Test (Xenon)

Thermal transfer printed Example 4 is subjected to a UV-test with xenon according to DIN 53387 and shows no significant change after 1000 hours.

### E. General Test Results

The layered materials of Example 1, 2 and 4 provide all best performance in all tests, e.g. destructibility, printability, chemical resistance to aggressive solvent and fuel even against aggressive fuel mixture of 50 % fuel, 30 % toluene and 20 % ethanol at 30 min dwell and also at UV-xenon testing performed according to DIN53387. The layered material of Example 3 although showing ink-debonding of the thermal transfer print after 7 minutes in toluene, does not show significant degradation after 30 minutes of immersion in E 85 or in the mixture of 50 % fuel, 30 % toluene and 20 % ethanol. All Comparative Examples 1 to 3 show poor performance either when exposed to solvent or fuel (ink-debonding) or in terms of destructibility.

## Claims

1. A layered material, comprising:
a) a polymer layer comprising the reaction product of a precursor mixture comprising from 20 wt% to 70 wt% of a hydroxy-functional polyester resin and at least 5 wt% of a cross-linking agent; and
b) an adhesive layer;
wherein the precursor mixture is free of any hydroxy-functional acrylic resin, and wherein the polymer layer is a base layer of the layered material being arranged on the adhesive layer.

2. A layered material according to claim 1, wherein the precursor mixture comprises from 20 wt% to 60 wt%, from 25 wt% to 50 wt%, or even from 30 wt% to 40 wt% of a hydroxy-functional polyester resin.

3. A layered material according to any of claim 1 or 2, wherein the precursor mixture comprises at least 10 wt%, or even at least 15 wt% of a cross-linking agent.

4. A layered material according to any of the preceding claims, wherein the precursor mixture comprises from 10 wt% to 40 wt%, from 10 wt% to 35 wt%, from 15 wt% to 30 wt%, or even from 15 wt% to 25 wt% of a cross-linking agent.

5. A layered material according to any of the preceding claims, wherein the cross-linking agent is an aminoplast cross-linking agent, preferably selected from the group consisting of triazines and triazine resins, aziridines, isocyanates, peroxides amines and any combinations or mixtures thereof.

6. A layered material according to any of the preceding claims, wherein the cross-linking agent is a triazine resin, preferably selected from the group of melamine resins, in particular melamine formaldehyde resins.

7. A layered material according to claim 6, wherein the cross-linking agent is a an alkylated melamine-formaldehyde resin, preferably a methylated melamine-formaldehyde resin having in particular a low degree of alkylation and/or a high imino functionality.

8. A layered material according to any of the preceding claims, wherein the base layer is printable by any means selected from the group of irradiation marking, thermal transfer printing, ink-jet printing, laser toner printing, and any combinations thereof.

9. A layered material according to any of the preceding claims, wherein the polymer layer is a base layer which is a laser ablatable layer or a layer markable by color change upon irradiation (without ablation), wherein the base layer is arranged on the adhesive layer.

10. A layered material according to any of the preceding claims, which further comprises a top layer arranged on the base layer, wherein the top layer is printable by any means selected from the group of irradiation marking, thermal transfer printing, ink-jet printing, and any combinations thereof; and wherein the top layer is in particular any of a laser ablatable layer, a layer markable by color change upon irradiation or an ink receptive layer.

11. A layered material according to claim 10, wherein the top layer comprises a material selected from the group consisting of polyolefin (in particular polyethylene, polypropylene), polystyrene, polyvinyl (in particular polyvinyl chloride or polyvinyl acetate), polyester, polyurethane, polyacrylate, polyvinylbutyral (PVB), and any combinations, mixtures or copolymers thereof.

12. A method of manufacturing a layered material according to any of claims 1 to 11, which comprises the steps of:
a) providing a precursor mixture comprising from 20 wt% to 70 wt% of a hydroxy-functional polyester resin and at least 5 wt% of a cross-linking agent, wherein the precursor mixture is substantially free of any hydroxy-functional acrylic resin;
b) providing a layer of the precursor mixture and crosslinking the mixture to form a polymer layer;
c) applying an adhesive layer onto the polymer film, and optionally, covering the adhesive layer with a release liner.

13. Use of a polymer layer comprising the reaction product of a precursor mixture, wherein the precursor mixture comprises from 20 wt% to 70 wt of a hydroxy-functional polyester resin and at least 5 wt% of a cross-linking agent, and wherein the precursor mixture is free of any hydroxy-functional acrylic resin, wherein the polymer layer is a base layer of the layered material being arranged on the adhesive layer in the manufacture of an article selected from the group consisting of labels; in particular tamper evident labels, destructible labels and security labels; signs; decorative films; protective films; and any combinations thereof.

## Patentansprüche

1. Geschichtetes Material, das Folgendes umfasst:
a) eine Polymerschicht, die das Reaktionsprodukt eines Vorläufergemischs umfasst, das 20 Gew.-% bis 70 Gew.-% eines hydroxyfunktionellen Polyesterharzes und mindestens 5 Gew.-% eines Vernetzungsmittels umfasst; und
b) eine Klebeschicht;
wobei das Vorläufergemisch frei von jeglichem hydroxyfunktionellem Acrylharz ist, und wobei die Polymerschicht eine Basisschicht des geschichteten Materials ist und auf der Klebeschicht angeordnet ist.

2. Geschichtetes Material nach Anspruch 1, wobei das Vorläufergemisch 20 Gew.-% bis 60 Gew.-%, 25 Gew.-% bis 50 Gew.-% oder sogar 30 Gew.-% bis 40 Gew.-% eines hydroxyfunktionellen Polyesterharzes umfasst.

3. Geschichtetes Material nach einem der Ansprüche 1 oder 2, wobei das Vorläufergemisch mindestens 10 Gew.-% oder sogar mindestens 15 Gew.-% eines Vernetzungsmittels umfasst.

4. Geschichtetes Material nach einem der vorstehenden Ansprüche, wobei das Vorläufergemisch 10 Gew.-% bis 40 Gew.-%, 10 Gew.-% bis 35 Gew.-%, 15 Gew.-% bis 30 Gew.-% oder sogar 15 Gew.-% bis 25 Gew.-% eines Vernetzungsmittels umfasst.

5. Geschichtetes Material nach einem der vorstehenden Ansprüche, wobei es sich bei dem Vernetzungsmittel um ein Aminoplastvernetzungsmittel handelt, das vorzugsweise ausgewählt ist aus der Gruppe bestehend aus Triazinen und Triazinharzen, Aziridinen, Isocyanaten, Peroxidaminen und jeglichen Kombinationen oder Mischungen davon.

6. Geschichtetes Material nach einem der vorstehenden Ansprüche, wobei es sich bei dem Vernetzungsmittel um ein Triazinharz handelt, das vorzugsweise ausgewählt ist aus der Gruppe aus Melaminharzen, insbesondere Melaminformaldehydharzen.

7. Geschichtetes Material nach Anspruch 6, wobei es sich bei dem Vernetzungsmittel um ein alkyliertes Melaminformaldehydharz handelt, vorzugsweise ein methyliertes Melaminformaldehydharz mit einem besonders niedrigen Alkylierungsgrad und/oder einer hohen Iminofunktionalität.

8. Geschichtetes Material nach einem der vorstehenden Ansprüche, wobei die Basisschicht mittels jeglicher Mittel bedruckbar ist, die ausgewählt sind aus der Gruppe aus Bestrahlungsmarkierung, Thermotransferdruck, Tintenstrahldruck, Lasertonerdruck und jeglichen Kombinationen davon.

9. Geschichtetes Material nach einem der vorstehenden Ansprüche, wobei es sich bei der Polymerschicht um eine Basisschicht handelt, bei der es sich um eine mit Laser abtragbare Schicht oder um eine bei Bestrahlung (ohne Abtragung) durch Farbveränderung markierbare Schicht handelt, wobei die Basisschicht auf der Klebeschicht angeordnet ist.

10. Geschichtetes Material nach einem der vorstehenden Ansprüche, das ferner eine auf der Basisschicht angeordnete, oberste Schicht umfasst, wobei die oberste Schicht mittels jeglicher Mittel bedruckbar ist, die ausgewählt sind aus der Gruppe aus Bestrahlungsmarkierung, Thermotransferdruck, Tintenstrahldruck und jeglichen Kombinationen davon, und wobei die oberste Schicht insbesondere eine mit Laser abtragbare Schicht oder eine bei Bestrahlung durch Farbveränderung markierbare Schicht oder eine tintenaufnahmefähige Schicht ist.

11. Geschichtetes Material nach Anspruch 10, wobei die oberste Schicht ein Material umfasst, das ausgewählt ist aus der Gruppe bestehend aus Polyolefin (insbesondere Polyethylen, Polypropylen), Polystyrol, Polyvinyl (insbesondere Polyvinylchlorid oder Polyvinylacetat), Polyester, Polyurethan, Polyacrylat, Polyvinylbutyral (PVB) und jeglichen Kombinationen, Mischungen oder Copolymeren davon.

12. Verfahren zur Herstellung eines geschichteten Materials nach einem der Ansprüche 1 bis 11, das die folgenden Schritte umfasst:
a) Bereitstellen eines Vorläufergemischs, das 20 Gew.-% bis 70 Gew.-% eines hydroxyfunktionellen Polyesterharzes und mindestens 5 Gew.-% eines Vernetzungsmittels umfasst, wobei das Vorläufergemisch im Wesentlichen frei von jeglichem hydroxyfunktionellem Acrylharz ist;
b) Bereitstellen einer Schicht des Vorläufergemischs und Vernetzen des Gemischs zur Bildung einer Polymerschicht;
c) Aufbringen einer Klebeschicht auf die Polymerfolie und wahlweise Bedecken der Klebeschicht mit einem Trennpapier.

13. Verwendung einer Polymerschicht, die das Reaktionsprodukt eines Vorläufergemischs umfasst, wobei das Vorläufergemisch 20 Gew.-% bis 70 Gew.-% eines hydroxyfunktionellen Polyesterharzes und mindestens 5 Gew.-% eines Vernetzungsmittels umfasst, und wobei das Vorläufergemisch frei von jeglichem hydroxyfunktionellem Acrylharz ist, wobei es sich bei der Polymerschicht um eine Basisschicht des geschichteten Materials handelt, die bei der Herstellung eines Artikels, ausgewählt aus der Gruppe bestehend aus Etiketten; insbesondere fälschungssicheren Etiketten, zerstörbaren Etiketten und Sicherheitsetiketten; Symbolen, Zierfolien; Schutzfolien; und jeglichen Kombinationen davon, auf der Klebeschicht angeordnet ist.

## Revendications

1. Matériau stratifié, comprenant :
a) une couche polymère comprenant le produit de réaction d'un mélange précurseur comprenant de 20 % en poids à 70 % en poids d'une résine polyester à fonction hydroxy et au moins 5 % en poids d'un agent de réticulation ; et
b) une couche adhésive ;
dans lequel le mélange précurseur est exempt d'une quelconque résine acrylique à fonction hydroxy, et dans lequel la couche polymère est une couche de base du matériau stratifié étant disposée sur la couche adhésive.

2. Matériau stratifié selon la revendication 1, dans lequel le mélange précurseur comprend de 20 % en poids à 60 % en poids, de 25 % en poids à 50 % en poids, ou même de 30 % en poids à 40 % en poids d'une résine polyester à fonction hydroxy.

3. Matériau stratifié selon l'une quelconque des revendications 1 ou 2, dans lequel le mélange précurseur comprend au moins 10 % en poids, ou même au moins 15 % en poids d'un agent de réticulation.

4. Matériau stratifié selon l'une quelconque des revendications précédentes, dans lequel le mélange précurseur comprend de 10 % en poids à 40 % en poids, de 10 % en poids à 35 % en poids, de 15 % en poids à 30 % en poids, ou même de 15 % en poids à 25 % en poids d'un agent de réticulation.

5. Matériau stratifié selon l'une quelconque des revendications précédentes, dans lequel l'agent de réticulation est un agent de réticulation aminoplaste, choisi de préférence dans le groupe constitué de triazines et résines de triazine, aziridines, isocyanates, peroxydes amines et n'importe quelles combinaisons ou n'importe quels mélanges de ceux-ci.

6. Matériau stratifié selon l'une quelconque des revendications précédentes, dans lequel l'agent de réticulation est une résine de triazine, choisie de préférence parmi le groupe de résines de mélamine, en particulier des résines de mélamine-formaldéhyde.

7. Matériau stratifié selon la revendication 6, dans lequel l'agent de réticulation est une résine de mélamine-formaldéhyde alkylée, de préférence une résine de mélamine-formaldéhyde méthylée ayant en particulier un faible degré d'alkylation et/ou une fonctionnalité imino élevée.

8. Matériau stratifié selon l'une quelconque des revendications précédentes, dans lequel la couche de base est imprimable par n'importe quel moyen choisi parmi le groupe de marquage par irradiation, impression par transfert thermique, impression par jet d'encre, impression par toner laser, et n'importe quelle combinaison de ceux-ci.

9. Matériau stratifié selon l'une quelconque des revendications précédentes, dans lequel la couche polymère est une couche de base qui est une couche pouvant être soumise à une ablation au laser ou une couche inscriptible par changement de couleur lors d'une irradiation (sans ablation), dans lequel la couche de base est disposée sur la couche adhésive.

10. Matériau stratifié selon l'une quelconque des revendications précédentes, qui comprend en outre une couche supérieure disposée sur la couche de base, dans lequel la couche supérieure est imprimable par n'importe quel moyen choisi parmi le groupe de marquage par irradiation, impression par transfert thermique, impression par jet d'encre, et n'importe quelle combinaison de ceux-ci et dans lequel la couche supérieure est, en particulier, n'importe laquelle d'une couche pouvant être soumise à une ablation au laser, une couche inscriptible par changement de couleur lors d'une irradiation ou une couche réceptrice d'encre.

11. Matériau stratifié selon la revendication 10, dans lequel la couche supérieure comprend un matériau choisi dans le groupe constitué de polyoléfine (en particulier, polyéthylène, polypropylène), polystyrène, polyvinyle (en particulier, chlorure de polyvinyle ou acétate de polyvinyle), polyester, polyuréthane, polyacrylate, polyvinylbutyral (PVB), et n'importe quels combinaisons, mélanges ou copolymères de ceux-ci.

12. Procédé de fabrication d'un matériau stratifié selon l'une quelconque des revendications 1 à 11, qui comprend les étapes consistant à :
a) fournir un mélange précurseur comprenant de 20 % en poids à 70 % en poids d'une résine polyester à fonction hydroxy et au moins 5 % en poids d'un agent de réticulation, dans lequel le mélange précurseur est essentiellement dépourvu d'une quelconque résine acrylique à fonction hydroxy ;
b) fournir une couche du mélange précurseur et réticuler le mélange pour former une couche polymère ;
c) appliquer une couche adhésive sur le film polymère et, éventuellement, couvrir la couche adhésive avec une protection détachable.

13. Utilisation d'une couche polymère comprenant le produit de réaction d'un mélange précurseur, dans laquelle le mélange précurseur comprend de 20 % en poids à 70 % en poids d'une résine de polyester à fonction hydroxy et au moins 5 % en poids d'un agent de réticulation, et dans lequel le mélange précurseur est exempt d'une quelconque résine acrylique à fonction hydroxy, dans laquelle la couche polymère est une couche de base du matériau stratifié disposée sur la couche adhésive dans la fabrication d'un article choisi dans le groupe constitué d'étiquettes ; en particulier, étiquettes révélant une tentative d'ouverture, étiquettes destructibles et étiquettes de sécurité ; signalisations ; films décoratifs ; films de protection ; et n'importe quelles combinaisons de ceux-ci.
